# EUROPÄISCHE PATENTSCHRIFT

(11) **EP 2 407 996 B1**
(45) Veröffentlichungstag und Bekanntmachung des Hinweises auf die Patenterteilung: **18.09.2013**
(21) Anmeldenummer: 11185109.3
(22) Anmeldetag: 31.03.2008
(51) Int. Cl.: H01H 85/00, H05K 5/00, H02J 3/38, H02M 7/00, G01R 31/07, G01R 19/165

(54) **Strommessvorrichtung in einem Wechselrichter**
Current sensing arrangement in an inverter
Dispositif de mesure de courant dans un onduleur

(43) Veröffentlichungstag der Anmeldung: 18.01.2012
(62) Teilanmeldung aus: 08006585.7
(73) Patentinhaber: SMA Solar Technology AG, 34266 Niestetal (DE)
(72) Erfinder: Gebert, Bernd, 34121 Kassel (DE)
(74) Vertreter: Rehberg Hüppe + Partner

(56) Entgegenhaltungen:
- EP-A- 0 342 101
- EP-A1- 1 857 825
- GB-A- 2 436 403
- US-B1- 6 686 744

## Beschreibung

Die Erfindung betrifft einen Wechselrichter mit den Merkmalen des Oberbegriffs des unabhängigen Patentanspruchs 1.

Es ist bekannt, Photovoltaik-Wechselrichter mit einer sogenannten GFDI (Ground Fault Detection and Interruption)-Schmelzsicherung im Gerät auszustatten. Durch diese Sicherung kann ein Strom mittels eines Stromwandlers überwacht werden. Sobald dieser Strom einen Grenzwert überschreitet, wird das Gerät vom Netz getrennt. Wenn der Strom anhält, wird ein Strompfad dadurch unterbrochen, dass die Schmelzsicherung durchbrennt. Der Wechselrichter kann signalisieren, dass ein Fehlerstrom, zum Beispiel größer als 1 A geflossen ist, und schaltet nicht wieder auf das Netz zu, solange der Fehler nicht behoben ist und die Sicherung ausgetauscht wurde.

Die verwendeten Schaltungen haben den Nachteil, dass ein ungewollter harter Erdschluss auf der bereits durch die Sicherung geerdeten Seite nur durch den Installateur mittels eines Messgerätes erkannt werden kann. Es kann vorkommen, dass die Sicherung beim Aufschalten des Wechselrichters an die Photovoltaikanlage sofort durchbrennt, die Anlage aber nicht erkennt, dass die Sicherung durchgebrannt ist, da keine automatische Unterscheidung zwischen einem gewollten und ungewollten harten Erdschluss möglich ist.

In den Kontinenten bzw. Ländern bestehen unterschiedliche Vorschriften bezüglich der GFID-Schmelzsicherung sowie der Erdung von Photovoltaikgeneratoren. Möglich ist nämlich, die positive oder die negative Generatorspannung zu erden. Beispielsweise wird in den USA eine GFDI (Ground Fault Detection and Interruption)Schmelzsicherung gefordert.

Für Geräte, die für die USA vorgesehen sind, wird die Sicherung standardmäßig entweder auf die negative oder die positive Seite auf den Erdungsanschluss PE geklemmt. Bekannt ist daher, dass mit Hilfe einer Sicherung eine Verbindung zwischen dem positiven oder negativen Generatoranschluss und dem Erdungsanschluss PE hergestellt werden kann.

Bekannt ist es, die Sicherung innerhalb des Wechselrichtergehäuses unterzubringen und wahlweise die positive oder negative Generatorspannung über die Sicherung durch einen Umsteckvorgang zu erden. Hilfreich ist hierbei ein sogenannter Jumper, der als eine Art Kurzschlussstecker auf Kontakte von Stiftleisten gesteckt wird und verschiedene Pins einer Stiftleiste elektrisch miteinander verbindet Eine Änderung der Erdungsart erfordert das Öffnen eines Gehäusedeckels. Weil Photovoltaikwechselrichter häufig einen hohen Schutz bezüglich Berührung und Wasser aufweisen, viele erfüllen z. B. die Schutzart IP-65 nach DIN EN 60529 (IEC 529NDE 047 T1), ist das Ändern und Austauschen der Sicherung umständlich.

Aus der EP 1 857 825 A1 sind Verfahren zur Bestimmung des Isolationswiderstandes Riso bekannt, die sowohl einen Fehler zur positiven Seite, also auch zur negativen Seite oder beides erfassen. Hierbei werden Schalter und Messshunts eingesetzt, um den Isolationswiderstand zu messen.

Bekannt sind Wechselrichter mit einer Sicherung zur Erdung des Solargenerators.

Der Erfindung liegt die Aufgabe zugrunde, einen Wechselrichter mit den Merkmalen des Oberbegriffs des unabhängigen Patentanspruchs 1 aufzuzeigen, bei dem die Sicherungsprüfung möglich ist..

Darüber hinaus soll die Vorrichtung so ausgeführt sein, dass eine Messung des Isolationswiderstandes Riso möglich ist, um auch eine GFDI Funktion erfüllen zu können, um so den Zustand der Sicherung feststellen zu können.

Diese Aufgabe wird durch einen Wechselrichter mit den Merkmalen des unabhängigen Patentanspruchs 1 gelöst.

Zudem ist eine Messung des Isolationswiderstandes Riso möglich, um den Zustand der Sicherung zu überprüfen. Hierbei gilt, dass in den Fällen, wo die Sicherung fehlt, herausgefunden werden kann, ob ein Isolationsfehler in dem Messfeld vorhanden ist.

Sowohl die Riso Messung als auch die Sicherung sind Komponenten einer Schaltung für eine GFDI (Ground Fault Detection and Interruption)-Überwachung.

Weitere vorteilhafte Ausgestaltungen der Erfindung sind in den Unteransprüchen gekennzeichnet.

In einer vorteilhaften Weiterbildung der erfindungsgemäßen Vorrichtung ist vorgesehen, dass die Schmelzsicherung in einem außerhalb des Wechselrichtergehäuses steckbaren Steckkontaktteil mit wenigstens drei Steckkontakten angeordnet und zwischen zwei der Kontakte geschaltet ist, wobei am Wechselrichtergehäuse wenigstens drei mit dem Steckkontaktteil korrespondierende Gegenkontakte vorhanden sind, und zwar für die positive, die negative Gleichspannung und den Erdungsanschluss, wobei das Steckkontaktteil derart umsteckbar ausgeführt ist, dass entweder die positive oder die negative Gleichspannung geerdet wird. Zweckmäßigerweise sind die Steckkontakte der Sicherung als Steckstifte ausgeführt und die des Gerätes als Buchsen. So können beispielsweise drei Kontakte über- oder nebeneinander angeordnet sein. Dadurch läßt sich der Sicherungs-Stecker einfach um 180° drehen und stecken, um eine Änderung der Erdung von positiv auf negativ und umgekehrt zu erreichen.

Besonders vorteilhaft ist es, dass die Schmelzsicherung in einem becherartigen Teil eingebettet ist, der die drei Steckkontakte trägt. Dadurch lässt sich ein hohe Schutzart, zum Beispiel IP-65 einfach umsetzen. Eine Dichtung kann in einfacher Weise zwischen dem Becher und dem Wechselrichtergehäuse platziert werden. So kann in dem Wechselrichtergehäuse die Buchse angebracht werden, die insbesondere sowohl eine Codierung, ob positiv oder negativ geerdet werden soll, abfragt als auch den Kontakt zur Erdungs-Sicherung herstellt. Es ist praktisch ein Becher mit dem Gegenstück zur Buchse vorhanden, der die Sicherung enthält, der aber in zwei Richtungen aufgesteckt werden kann. Die erste Steckrichtung wäre die positive Erdung, die zweite Richtung die negative Erdung. Der Becher kann im Querschnitt kreisförmig, flach abgerundet sein oder eine andere Form aufweisen. Zudem bietet die Becherlösung den Vorteil, dass die Sicherung leicht ausgewechselt werden kann.

Bei einer weiteren vorteilhaften Ausführung der Erfindung weist das Steckkontaktteil eine elektrische und/oder mechanische Steckcodierung auf. Dadurch wird sichergestellt, dass ein falscher Anschluss des Erdpotentials vermieden wird. Eine mechanische Codierung kann beispielsweise durch Codierungsstifte oder ähnliches geschaffen werden. Eine elektrische Codierung der Steckrichtung kann durch eine in Reihe zur Sicherung angeordnete zusätzliche Diode bewerkstelligt werden, die zusätzlich in dem Becher integriert ist. Hierdurch ergeben sich zwei zusätzliche Kontakte. Durch die Kontakte kann die Flussrichtung der Diode ausgewertet werden, um zu ermitteln, ob die positive oder die negative Seite des Generators geerdet ist. Dies ist wesentlich, um zu erkennen, ob ein ungewollter harter Erdschluss vorliegt.

Bevorzugterweise erfolgt in dem Wechselrichter eine Messung eines Isolationswiderstandes Riso mit wenigstens einem im Gleichstrompfad liegenden Shunt. Insbesondere sind zwei Shunts vorhanden, wobei der erste Shunt an einem positiven Strompfad liegt und der zweite Shunt am negativen Strompfad liegt, wobei vorzugsweise zwei Schalter zur Herstellung von unterschiedlichen Messzustände zur Bestimmung des Isolationswiderstandes Riso eingesetzt werden, wobei der erste Schalter zwischen der positiven Gleichspannung und dem Erdungsanschluss liegt und der zweite Schalter zwischen der negativen Gleichspannung und dem Erdungsanschluss liegt. Dadurch ist eine erste Messung möglich, bei der der erste Schalter geöffnet und der zweite Schalter geschlossen ist und eine zweite Messung möglich, bei der der erste Schalter geschlossen und der zweite Schalter geöffnet ist. Aus den beiden Messungen sind Isolationsfehler erkennbar, die gleichzeitig gegen eine positive als auch gegen eine negative Spannung gerichtet sind. Ein tatsächlicher Isolationswiderstand Riso ist somit genau erfassbar.

Um die Sicherungsprüfung zu ermöglichen, ist nach einer Weiterbildung der Erfindung vorgesehen, dass eine Überwachungseinheit zur Überwachung eines durch die Schmelzsicherung fließenden Fehlerstromes eingesetzt wird. Der Fehlerstrom kann ein gewollter oder ungewollter harter Erdschluss sein. Eine defekte Sicherung kann dann erkannt werden. Im Falle eines harten Fehlers auf der bereits geerdeten Seite wird die Sicherung noch vor dem Aufschalten ans Netz durchbrennen. Zudem kann zwischen einem gewollten und einer ungewollten Erdung unterschieden werden.

Vorteilhaft ist die Verwendung der Erfindung im Zusammenhang mit einem Wechselrichter mit einem Transformator zur galvanischen Trennung.

Ausführungsbeispiele werden anhand der Zeichnungen näher erläutert, wobei weitere vorteilhafte Weiterbildungen der Erfindung und Vorteile derselben beschrieben sind. Es zeigen:
- Fig. 1: eine schematische Darstellung eines Photovoltaikwechselrichters,
- Fig. 2: eine Darstellung einer ersten, nicht erfindungsgemäßen Schaltung einer Schaltungsvorrichtung,
- Fig. 3: eine vergrößerte Prinzipdarstellung eines Sicherungssteckteils,
- Fig. 4: eine vergrößerte perspektivische Darstellung eines in Fig. 3 gezeigten Sicherungssteckteils,
- Fig. 5: eine Darstellung einer zweiten, nicht erfindungsgemäßen Schaltungsvariante der Schaltungsvorrichtung,
- Fig. 6: eine Darstellung einer dritten, erfindungsgemäßen Schaltungsvariante der Schaltungsvorrichtung,
- Fig. 7: eine Darstellung einer vierten, erfindungsgemäßen Schaltungsvariante der Schaltungsvorrichtung, und
- Fig. 8: eine Übersicht der Eigenschaften der gezeigten Varianten der Schaltungsvorrichtungen in Tabellenform.
In den Figuren sind gleiche Teile mit denselben Bezugszeichen versehen.

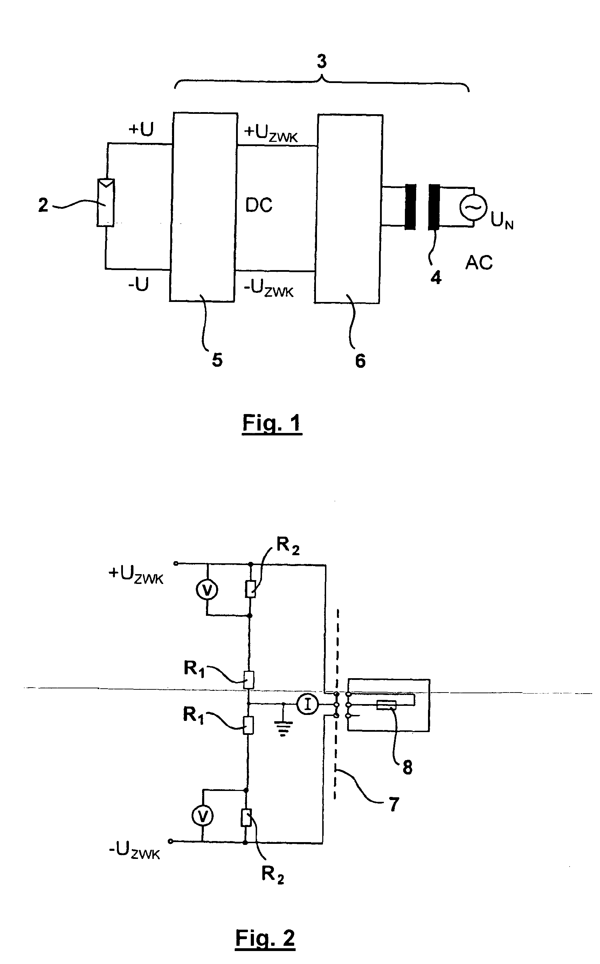

Fig. 1 zeigt eine Photovoltaikanlage 1 mit einem Photovoltaikgenerator 2, einem Wechselrichter 3 mit einem Transformator 4 zur galvanischen Trennung zwischen der DC Seite und der AC- bzw. Netzseite. Der Wechselrichter kann als Stringwechselrichter oder als Einzelwechselrichter ausgeführt sein. Es sind die Gleichspannungen +U und-U vorhanden.

Der Wechselrichter 3 kann einen Hochsetz- und/oder Tiefsetzsteller 5 umfassen. Eine Brückenschaltung 6 mit Halbleiterschaltelementen dient als DC/AC-Wandlerschaltung. Der Wechselrichter 3 wandelt die Gleichspannung +U / -U in eine netzfrequente Wechselspannung U_{N} mit z. B. 110/220/380 V und 50/60 Hz. Der Wechselrichter 3 kann eine Impulsweitensteuerung sowie eine MPP-Regelung haben.

Der Generator 2 kann auf der positiven oder negativen Seite geerdet werden.

Fig. 2 zeigt eine Schaltungsvorrichtung zur Erdung des Wechselrichters 3 bzw. des Generators 2. Der Wechselrichter 3 umfasst ein Wechselrichtergehäuse, das mit dem Bezugszeichen 7 angedeutet ist. Eine Schmelzsicherung 8 verbindet die eine positive oder negative Gleichspannung + Uzwk, -Uzwk mit einem Erdungsanschluss PE.

Erfindungsgemäß ist am Wechselrichtergehäuse 7 die von außen zugängliche und von außen aufsteckbare Schmelzsicherung 8 angeordnet.

Die Sicherung 8 ist wahlweise auf eine positive oder negative Gleichspannung derart kontaktierbar, dass entweder die positive oder negative Gleichspannung über die Schmelzsicherung 8 geerdet wird, also mit PE verbunden ist.

Weiterhin umfasst die Schaltung nach Fig. 2 eine Überwachungseinheit zur Überwachung eines durch die Schmelzsicherung fließenden

Fehlerstromes, insbesondere eines ungewollten harten Erdschlusses. Die Schaltung besteht aus jeweils zwei Spannungsteilern (R₁, R₂), die von +Uzwk und -Uzwk gegen Erde geschaltet sind. Durch die Spannungsmessung an R2 kann beispielsweise ermittelt werden, ob die Sicherung 8 vorhanden ist, wobei, wenn die Sicherung vorhanden ist, die Spannung auf der geerdeten Seite 0 beträgt. Im Fall eines harten Erdungsfehlers, also bei Durchschmelzen der Sicherung, wird die Spannung der geerdeten Seite von PE auf ein Potential steigen, was spannungsmäßig zwischen den Solargeneratoren liegt, es findet also eine Spannungsaufteilung zwischen den Solargeneratoren statt.

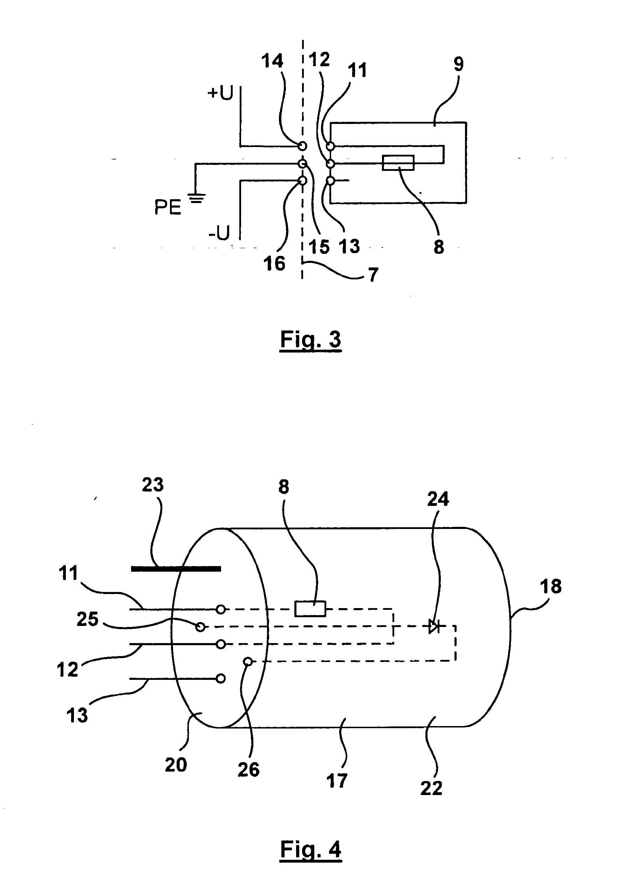

Wie Fig. 3 veranschaulicht, ist die Schmelzsicherung 8 vorzugsweise in einem außerhalb des Wechselrichtergehäuses 7 steckbaren Steckkontaktteil 9 mit drei Steckkontakten 11, 12, 13 angeordnet und zwischen den Kontakten 11 und 12 angeordnet. Am Wechselrichtergehäuse 7 sind drei mit dem Steckkontaktteil 9 korrespondierende Gegenkontakte 14, 15, 16 vorhanden. Die Gegenkontakte 14, 15, 16 sind mit der positivenGleichspannung +U / , dem Erdungsanschluss PE und der negativen Gleichspannung verbunden. Das Steckkontaktteil 9 ist derart umsteckbar ausgeführt, dass entweder die positive oder die negative Gleichspannung +U / -U über die Sicherung 8 geerdet wird.

Insbesondere ist die Schmelzsicherung 8 in einem becherartigen Teil 17 eingebettet, der die drei Steckkontakte 11, 12, 13 trägt. Diese sind als Stecker ausgeführt, die in Buchsen am Gehäuse 7 greifen.

Das becherartige Teil 17 bzw. der Becher hat zum Beispiel eine zylindrische Form, die zumindest aber auch teilweise konisch verlaufen kann. Der Becher hat einen geschlossenen Becherboden 18 und einen loslösbaren Becherdeckel 20, der die Steckkontakte 11, 12, 13 führt. Andere Ausführungen, wie rechteckige Ausführungen des Steckkontaktteils 9 sind auch möglich. Das Steckkontaktteil 9 hat zumindest ein Gehäuse 22 für die Sicherung 8, das z.B. die Schutzart IP-65 erfüllt. Diese ist über den Deckel 20 zugänglich.

Das Steckkontaktteil 9 kann so gesteckt werden, dass entweder der erste Steckkontakt 11 mit dem ersten Gegenkontakt 14 zusammentrifft oder der Steckkontakt 11 mit dem dritten Gegenkontakt 16 zusammentrifft. Hierzu muss er nur gedreht werden. Dadurch ist die Erdung auf positive oder negative Spannung wählbar, ohne dass ein Deckel des Wechselrichters 3 geöffnet werden muss.

Wie Fig. 4 zeigt, hat das Steckkontaktteil 9 mindestens eine mechanische Steckkodierung 23 und/oder eine elektrische Kodierung durch Kontakte 25, 26. Die elektrische Kodierung 25, 26 umfasst eine Diode 24, um die positive oder negative Erdung zu erkennen. Hierzu sind Kontakte 25, 26 im Becher vorgesehen. Durch die Kontakte wird die Flussrichtung der Diode ausgewertet, die erkennen lässt, ob die positive oder negative Seite des Generators geerdet ist. Bei der mechanischen Codierung, die durch einen Zapfen 23 mit einer korrespondierenden Öffnung am Gehäuse 7 geschaffen werden kann, ist das Steckkontaktteil 9 nur in zwei definierte Positionen steckbar.

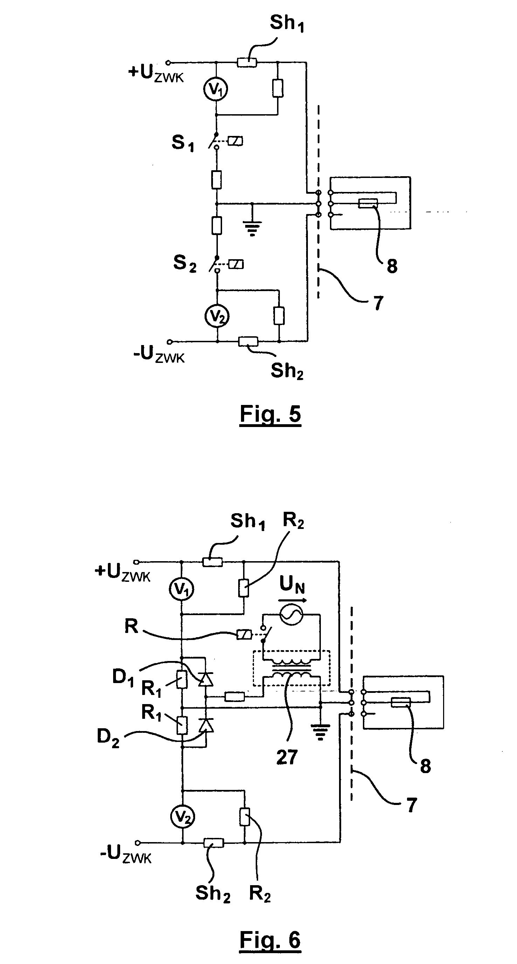

Die Fig. 5 zeigt eine Schaltungsvariante, mit der eine präzise Messung des Isolationswiderstandes möglich ist und die einen Erdschluss des Generators 2 erkennt. Insbesondere sind zwei Shunts Sh1, Sh2 vorhanden, wobei der erste Shunt Sh1 an dem positiven Strompfad liegt und der zweite Shunt Sh2 am negativen Strompfad liegt. Diese dienen der indirekten Sicherungsstrommessung. Der Strom, welcher die Widerstände Sh1 und Sh2 durchströmt, führt zu einer Spannungserhöhung an V1 bzw. V2. Die Schalter S1 und S2 dienen der präzisen Messung des Isolationswiderstandes Riso. Der erste Schalter S1 liegt zwischen der positiven Gleichspannung +Uzwk und dem Erdungsanschluss PE und der zweite Schalter S2 liegt zwischen der negativen Gleichspannung -Uzwk und dem Erdungsanschluss PE. Im ersten Messzustand bzw. Messschritt ist der Schalter S1 offen und der Schalter S2 zu und im zweiten Messzustand bzw. Messschritt ist der Schalter S2 offen und der Schalter S1 zu. Die Schalter sind steuerbare Schalter, zum Beispiel Relais. Gemäß Figur 6 wird eine Wechselspannung über einen Transformator 27 eingekoppelt. Der Strom wird über Dioden D1 und D2 aufgeteilt, die jeweils unterschiedliche Halbwellen führen. Die Wechselspannung kann die Netzspannung U_{N} sein. Die Wechselspannung kann über einen steuerbaren Schalter, z. B. ein Relais R, zuschaltbar sein. Die Spannungsteiler gemäß Fig. 2 werden beibehalten. Dadurch wird der Strom durch die Sicherung 8 überwacht.

Bei der dritten Schaltungsvariante gemäß Fig. 6 ist es möglich, außerdem zwischen einem gewollten und ungewollten Erdschluss zu unterscheiden. Hier kann eine defekte Sicherung immer erkannt werden. Im Falle eines harten Erdfehlers auf der bereits geerdeten Seite wird die Sicherung noch vor einem Aufschalten durchbrennen. Die Schaltung umfasst die Shunts Sh1 und Sh2 gemäß Fig. 5 und die Spannungsteiler gemäß Fig. 2.

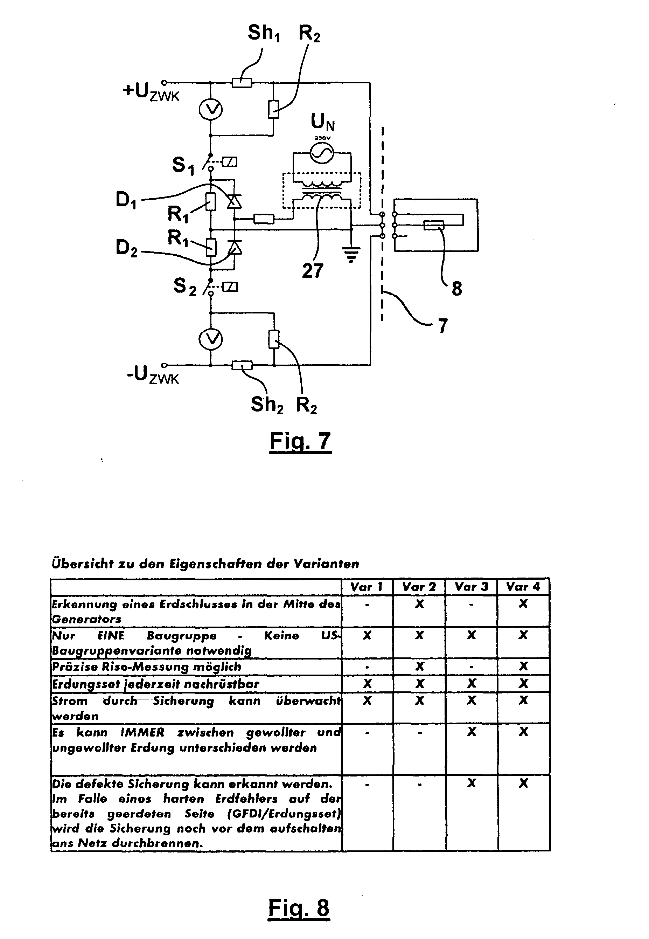

Die Ausführungsform gemäß Fig. 7 ist eine Kombination der Schaltungen gemäß Fig. 6 und Fig. 5.

In Fig. 8 sind die Eigenschaften der jeweiligen Schaltungsvarianten gemäß Fig. 2 (Var 1), Fig. 5 (Var 2), Fig. 6 (Var 3), Fig. 7 (Var 4) in Tabellenform zusammengefasst.

Der Photovoltaik-Wechselrichter 3 kann durch die Erfindung mit einer GFDI-Schmelzsicherung im Gerät ausgestattet werden. Durch diese Sicherung kann ein Strom mittels des Stromwandlers überwacht werden. Sobald dieser Strom einen Grenzwert überschreitet, wird der Wechselrichter 3 vom Netz getrennt. Wenn der Strom weiter fließt, wird ein Strompfad dadurch unterbrochen, dass die Schmelzsicherung 8 durchbrennt. Der Wechselrichter 3 kann signalisieren, dass ein Fehlerstrom zum Beispiel größer als 1 A geflossen ist, und schaltet nicht wieder auf das Netz zu, solange der Fehler nicht behoben ist und die Sicherung ausgetauscht wurde.

Die in Fig. 6 und in Fig. 7 dargestellten verwendeten Schaltungen haben den Vorteil, dass ein ungewollter harter Erdschluss auf der bereits durch die Sicherung geerdeten Seite nicht mehr mit einem zusätzlichen Messgerät gemessen werden muss. Es kann nicht mehr vorkommen, dass die Sicherung beim Aufschalten des Wechselrichters an die Photovoltaikanlage sofort durchbrennt, die Anlage aber nicht erkennt, dass die Sicherung durchgebrannt ist. Es ist immer eine automatische Unterscheidung zwischen einem gewollten und ungewollten harten Erdschluss möglich.

Durch die Erfindung können Vorschriften, insbesondere in den USA erfüllt werden. Dort wird eine GFDI-Schmelzsicherung sowie die Erdung von Photovoltaikgeneratoren gefordert. Möglich ist auch sowohl die positive als auch die negative Generatorspannung zu erden.

Die Erfindung ist nicht auf dieses Beispiel beschränkt, so kann die Sicherung auf eine andere Weise als in einem Becherteil von außen kontaktierbar sein.

Auch kann jedes beschriebene oder gezeigte Einzelmerkmal mit jedem anderen Merkmal kombiniert werden.

### BEZUGSZEICHENLISTE

- 1: Photovoltaikanlage
- 2: Photovoltaikgenerator
- 3: Wechselrichter
- 4: Transformator
- 5: Hochsetz- oder Tiefsetzsteller
- 6: Brückenschaltung
- 7: Wechselrichtergehäuse
- 8: Schmelzsicherung
- 9: Steckkontaktteil
- 10: -
- 11, 12, 13: Steckkontakte
- 14, 15, 16: Gegenkontakte
- 17: becherartiges Teil
- 18: Becherboden
- 19: -
- 20: Becherdeckel
- 21: -
- 22: Gehäuse
- 23: Steckkodierung
- 24: Elektrische Kodierung
- 25: Mechanische Steckkodierung
- 26: Zapfen
- 27: Stromwandler

## Patentansprüche

1. Wechselrichter (3), der eine Gleichspannung in eine netzfrequente Wechselspannung wandelt, wobei eine Schmelzsicherung (8) wahlweise eine positive oder negative Gleichspannung (+Uzwk oder -Uzwk) mit einem Erdungsanschluss (PE) verbindet, so dass entweder die positive oder negative Gleichspannung (+Uzwk oder -Uzwk) über die Schmelzsicherung (8) geerdet ist, **gekennzeichnet durch**
eine Schaltungsanordnung zur Strommessung **durch** die Schmelzsicherung (8),
mit zwei Spannungsteilern aus Widerständen (R₁, R₂), welche von der positiven Gleichspannung (+Uzwk) und der negativen Gleichspannung (-Uzwk) gegen Erde geschaltet sind,
mit zwei Shunts (Sh1, Sh2), wobei der erste Shunt (Sh1) in einem positiven Strompfad von der positiven Gleichspannung (+Uzwk) zu der Schmelzsicherung (8) liegt und der zweite Shunt (Sh2) in einem negativen Strompfad von der negativen Gleichspannung (-Uzwk) zu der Schmelzsicherung (8) liegt,
mit je einer Spannungsmessung (V1, V2) über eine Reihenschaltung aus einem Widerstand (R₂) eines der Spannungsteiler und einem der Shunts (Sh1, Sh2), so dass ein Strom, welcher einen der Shunts (Sh1, Sh2) durchströmt, zu einer Spannungserhöhung an einer der Spannungsmessungen (V1 bzw. V2) führt,
mit einer über einen Transformator (27) einkoppelbaren Wechselspannung (U_{N}), wobei ein von dem Erdanschluss (PE) durch den Transformator (27) fließende Strom über zwei Dioden (D1 und D2), die jeweils unterschiedliche Halbwellen des Stroms von dem Erdanschluss (PE) führen und an Mittelpunkte zwischen den Widerständen der beiden Spannungsteiler angeschlossen sind, auf die Spannungsteiler aufgeteilt wird.

2. Wechselrichter (3) nach Anspruch 1,
**dadurch gekennzeichnet,**
**dass** die Wechselspannung über einen steuerbaren Schalter zuschaltbar ist.

3. Wechselrichter (3) nach Anspruch1 oder 2,
**dadurch gekennzeichnet,**
**dass** zwei Schalter (S1, S2) zur Herstellung von unterschiedlichen Messzuständen zur Bestimmung des Isolationswiderstandes Riso vorhanden sind, wobei der erste Schalter (S1) in dem Spannungsteiler zwischen der positiven Gleichspannung (+Uzwk) und dem Erdungsanschluss (PE) liegt und der zweite Schalter (S2) in dem Spannungsteiler zwischen der negativen Gleichspannung (-Uzwk) und dem Erdungsanschluss (PE) liegt.

4. Wechselrichter (3) nach einem der vorhergehenden Ansprüche, **gekennzeichnet durch**,
einen Transformator (4) zur galvanischen Trennung.

5. Verwendung eines Wechselrichters (3) nach einem der vorhergehenden Ansprüche zur Umwandlung eines Photovoltaikstroms mindestens eines Photovoltaikgenerators (2).

## Claims

1. Inverter (3) which inverts a DC voltage into an AC voltage at a grid frequency, wherein a fuse (8) selectively either connects a positive or negative DC voltage (+Uzwk or -Uzwk) with a ground connection (PE) such that either the positive or negative DC voltage (+Uzwk or -Uzwk) is grounded via the fuse (8), **characterised by**
a circuitry arrangement for measuring a current through the fuse (8),
comprising two voltage dividers made of resistors (R₁, R₂) which are connected from the positive DC voltage (+Uzwk) and the negative DC voltage (-Uzwk) towards ground,
comprising two shunts (Sh1, Sh2), wherein the first shunt (Sh1) is located in a positive current path from the positive DC voltage (+Uzwk) to the fuse (8) and the second shunt is located in a negative current path from the negative DC voltage (-Uzwk) to the fuse (8),
comprising voltage measurements (V1, V2) each over a series connection of a resistor (R₂) of one of the voltage dividers and one of the shunts (Sh1, Sh2), such that a current which flows through one of the shunts (Sh1, Sh2) results in an increase of voltage at one of the voltage measurements (V1 or V2),
comprising an AC voltage (U_{N}) which can be coupled-in via a transformer (27), wherein a current flowing from the ground connection (PE) through the transformer (27) is distributed over the voltage dividers via two diodes (D1 and D2) which lead different half waves of the current from the ground connection (PE) and which are connected to intermediate points between the resistors of the two voltage dividers.

2. Inverter (3) of claim 1, **characterised in that** the AC voltage is connectable via a controllable switch.

3. Inverter (3) of claim 1 or 2, **characterised in that** two switches (S1, S2) are provided for producing different measurement states for determining the isolation resistance Riso, wherein the first switch (S1) is located in the voltage divider between the positive DC voltage (+Uzwk) and the ground connection (PE) and the second switch (S2) is located in the voltage divider between the negative DC voltage (-Uzwk) and the ground connection (PE).

4. Inverter (3) of any of the preceding claims, **characterised by** a transformer (4) for galvanic separation.

5. Use of an inverter (3) of any of the preceding claims for inverting a photovoltaic current of at least one photovoltaic generator (2).

## Revendications

1. Onduleur (3) qui transforme une tension continue en une tension alternative à la fréquence du réseau, étant entendu qu'un coupe-circuit à fusible (8) relie au choix une tension continue positive ou négative (+Uzwk ou -Uzwk) à une borne de mise à la terre (PE) de telle sorte que la tension continue soit positive, soit négative (+Uzwk ou -Uzwk) est mise à la terre par le biais du coupe-circuit à fusible (8), **caractérisé par**:
un agencement de commutation destiné à mesurer le courant au travers du coupe-circuit à fusible (8),
comprenant deux diviseurs de tension constitués de résistances (R₁, R₂) qui sont commutés contre la terre par la tension continue positive (+Uzwk) et la tension continue négative (-Uzwk),
comprenant deux shunts (Sh1, Sh2), étant entendu que le premier shunt (Sh1) se trouve dans un chemin de courant positif depuis la tension continue positive (+Uzwk) vers le coupe-circuit à fusible (8) et le deuxième shunt (Sh2) dans un chemin de courant négatif depuis la tension continue négative (-Uzwk) vers le coupe-circuit à fusible (8),
comprenant respectivement une mesure de la tension (V1, V2) par le biais d'un montage en série constitué d'une résistance (R₂) d'un des diviseurs de tension et d'un des shunts (Sh1, Sh2) de telle sorte qu'un courant qui traverse un des shunts (Sh1, Sh2) entraîne une augmentation de la tension au niveau d'une des mesures de la tension (V1 ou V2),
comprenant une tension alternative (UN) pouvant être couplée par le biais d'un transformateur (27), étant entendu qu'un courant circulant au travers du transformateur (27) depuis la borne de mise à la terre (PE) est réparti dans les diviseurs de tension par le biais de deux diodes (D1 et D2), qui respectivement, conduisent des demi-ondes différentes du courant depuis la borne de mise à la terre (PE) et sont connectées à des points centraux entre les résistances des deux diviseurs de tension.

2. Onduleur (3) selon la revendication 1, **caractérisé en ce que** la tension continue peut être activée par le biais d'un commutateur pouvant être commandé.

3. Onduleur (3) selon la revendication 1 ou 2, **caractérisé en ce qu'**il est prévu deux commutateurs (S1, S2) destinés à réaliser différents états de mesure afin de déterminer la résistance de l'isolation Riso, étant entendu que le premier commutateur (S1) se trouve dans le diviseur de tension entre la tension continue positive (+Uzwk) et la borne de mise à la terre (PE) et le deuxième commutateur (S2) se trouve dans le diviseur de tension entre la tension continue négative (-Uzwk) et la borne de mise à la terre (PE).

4. Onduleur (3) selon l'une des revendications précédentes, **caractérisé par** un transformateur (4) destiné à la séparation galvanique.

5. Utilisation d'un onduleur (3) selon l'une des revendications précédentes pour transformer un courant photovoltaïque d'au moins un générateur photovoltaïque (2).
